# EUROPEAN PATENT APPLICATION

(11) **EP 4 765 312 A1**
(43) Date of publication of application: **24.06.2026**
(21) Application number: 25774898.8
(22) Date of filing: 10.03.2025
(51) Int. Cl.: H01M 10/42, H01M 50/152, A62C 3/16, A62C 35/10, A62D 1/00, H01M 50/583, H01M 50/342

(54) **SECONDARY BATTERY**

(30) Priority: 21.03.2024 KR 20240039339
(71) Applicant: LG Energy Solution, Ltd., Seoul 07335 (KR)
(72) Inventor: PARK, Hyun Woo, Daejeon 34122 (KR)
(74) Representative: Goddar, Heinz J.
(86) International application number: PCT/KR2025/003116
(87) International publication number: WO 2025/198236

(57) **Abstract**

The present disclosure relates to a secondary battery. A secondary battery according to an embodiment of the present disclosure may include a cylindrical electrode assembly; a can housing accommodating the electrode assembly; and a top cap assembly coupled to the can housing to cover the electrode assembly, wherein the top cap assembly may include a fire extinguishing module having a fire extinguishing material configured to sprayed onto the electrode assembly; and a top cap disposed above the fire extinguishing module and electrically connected to the electrode assembly to enable electrical connection to the outside, wherein the fire extinguishing module may include a fire extinguishing capsule in which a receiving space accommodating a fire extinguishing material is formed and at least a portion of the fire extinguishing capsule is formed to be meltable; and a support frame that is coupled to the fire extinguishing capsule to support the fire extinguishing capsule and has an opening formed in a portion of the support frame to enable the fire extinguishing material flow to the electrode assembly.

## Description

### TECHNICAL FIELD

### CROSS-REFERENCE TO RELATED APPLICATIONS

The present application claims priority to Korean Patent Application No. 10-2024-0039339 filed on March 21, 2024 in the Republic of Korea, the disclosures of which are incorporated herein by reference.

### TECHNICAL FIELD

The present disclosure relates to a secondary battery, and particularly, to a cylindrical secondary battery.

### BACKGROUND ART

Secondary batteries that can be repeatedly charged and discharged may be classified into pouch-type secondary batteries, prismatic secondary batteries, cylindrical secondary batteries, and the like depending on the structure and manufacturing method thereof. Among them, cylindrical secondary batteries generally have a structure in which an electrode assembly is accommodated inside a cylindrical battery can and a top cap is coupled to the top of the battery can.

Meanwhile, in the case of secondary batteries, when a large current flows in a short period of time due to overcharge, external short circuit, needle penetration, local damage, or the like, there is a risk of explosion as the battery is heated by IR heat generation. That is, when the pressure or temperature of the secondary battery rises, the decomposition reaction of the active material and numerous side reactions proceed, and accordingly, the temperature of the secondary battery rises rapidly, which in turn accelerates the reaction between the electrolyte and the electrode. Eventually, a thermal runaway phenomenon in which the temperature of the battery rises rapidly occurs, and when the temperature rises above a certain level, the battery may ignite, and the secondary battery may explode due to the increased internal pressure of the battery.

In the case of conventional cylindrical secondary batteries, there is an internal space that may be utilized, such as a hollow portion between the top cap and the electrode assembly, but there is a limitation of being no way to fundamentally suppress ignition or flame generated in an abnormal operating state.

The above-described background technology is possessed or acquired by the inventor in the process of deriving the disclosure content of the present application, and cannot necessarily be said to be a known technology disclosed to the general public prior to the filing of this application.

### SUMMARY

### TECHNICAL PROBLEM

The present disclosure is designed to solve the above-described problems, and therefore the present disclosure is directed to providing a secondary battery capable of improving thermal stability by including a top cap assembly having a fire extinguishing module.

### TECHNICAL SOLUTION

A secondary battery according to an embodiment of the present disclosure may include a cylindrical electrode assembly; a can housing accommodating the electrode assembly; and a top cap assembly coupled to the can housing to cover the electrode assembly, wherein the top cap assembly may include a fire extinguishing module having a fire extinguishing powder sprayed to the electrode assembly; and a top cap disposed above the fire extinguishing module and disposed to be electrically connectable to the electrode assembly to enable electrical connection to the outside, wherein the fire extinguishing module may include a fire extinguishing capsule in which a receiving space accommodating the fire extinguishing material is formed and at least a portion thereof is formed to be meltable; and a support frame that is coupled to the fire extinguishing capsule to support the fire extinguishing capsule and has an opening formed in a portion thereof so that the fire extinguishing material to flow to the electrode assembly.

The support frame may include a base portion supporting the fire extinguishing capsule; and a protrusion protruding upward at a predetermined height from a center part of the base portion.

A through hole through which the protrusion penetrates may be formed in a center part of the fire extinguishing capsule.

The protrusion may include a blocking plate electrically connected to the electrode assembly and provided to block an overcurrent; and a connection frame extending in the vertical direction between the blocking plate and the base portion.

The openings may be formed in plurality in the base portion.

The plurality of openings may be spaced apart from each other along the circumferential direction on the base portion.

The fire extinguishing capsule may include a housing portion forming the receiving space; and a melting portion formed on a bottom surface of the housing portion and provided to melt above a preset temperature to eject the fire extinguishing material.

The melting portion may be provided to protrude downward from the bottom surface of the housing portion.

The bottom surface of the housing portion may be formed to be inclined in a direction of decreasing height toward the melting portion.

The melting portion may be inserted into the opening.

The plurality of openings may be formed to be spaced apart from each other along the circumferential direction on the base portion

The plurality of melting portions may be spaced apart from each other along the circumferential direction on the bottom surface of the housing portion corresponding to the positions of the openings.

A top cap assembly according to an embodiment of the present disclosure is provided to be coupled to a cylindrical electrode assembly, and may include a fire extinguishing capsule in which a receiving space accommodating a fire extinguishing material is formed and at least a portion thereof is formed to be meltable; a support frame that is coupled to the fire extinguishing capsule to support the fire extinguishing capsule and has an opening formed in a portion thereof the fire extinguishing material flow to the electrode assembly; and a top cap disposed above the coupled support frame and fire extinguishing capsule and provided to be electrically connected to the electrode assembly to enable electrical connection to the outside.

The top cap assembly may further include a vent cover that is disposed between the top cap and the fire extinguishing capsule, is provided to rupture above a preset pressure to eject gas, and has an edge formed to be bent so as to surround the fire extinguishing capsule.

A fire extinguishing module according to an embodiment of the present disclosure is provided above a cylindrical electrode assembly to eject a fire extinguishing material, and may include a fire extinguishing capsule in which a receiving space accommodating the fire extinguishing material is formed and at least a portion thereof is formed to be meltable; and a support frame that is coupled to the fire extinguishing capsule to support the fire extinguishing capsule and has an opening formed in a portion thereof so that the fire extinguishing material to flow to the electrode assembly.

### ADVANTAGEOUS EFFECTS

A secondary battery according to one embodiment of the present disclosure may improve thermal stability by including a top cap assembly having a fire extinguishing module.

In addition, effects that may be easily predicted by those skilled in the art from configurations according to embodiments of the present disclosure may be included.

### BRIEF DESCRIPTION OF THE DRAWINGS

FIG. 1 is a cross-sectional view of a secondary battery according to Embodiment 1 of the present disclosure.
FIG. 2 is a cross-sectional view showing a top cap assembly of the secondary battery illustrated in FIG. 1.
FIG. 3 is a cross-sectional view showing a coupling structure of a fire extinguishing module of the top cap assembly illustrated in FIG. 2.
FIG. 4 is a plan view of a support frame of a fire extinguishing module according to Embodiment 1 of the present disclosure.
FIG. 5 is a cross-sectional view taken along line a-a in FIG. 4.
FIG. 6 is a bottom view of a fire extinguishing capsule of a fire extinguishing module according to Embodiment 1 of the present disclosure.
FIG. 7 is a cross-sectional view taken along line b-b in FIG. 6.
FIG. 8 is a plan view of a vent cover of a secondary battery according to Embodiment 1 of the present disclosure.
FIG. 9 is a cross-sectional view taken along line c-c in FIG. 8.
FIG. 10 is a plan view of a support frame of a fire extinguishing module according to Embodiment 2 of the present disclosure.
FIG. 11 is a cross-sectional view taken along line d-d in FIG. 10.

### DETAILED DESCRIPTION

Hereinafter, preferred embodiments of the present disclosure will be described in detail with reference to the accompanying drawings to enable those having ordinary skill in the technical field to which the present disclosure appertains to easily carry out the present disclosure. The following description is one of several aspects of the embodiments, and in describing one embodiment, a specific description of a known function or configuration will be omitted to clarify the gist of the present disclosure.

In this specification, in affixing the reference numerals to the elements in each drawing, the identical or similar reference numerals are affixed to the identical or similar elements throughout the specification. Components included in any one embodiment and components including common functions will be described using the same names in other embodiments. It should be understood that the terms or words used in this specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Additionally, the present disclosure is not limited to the embodiments described above, and various modifications and variations may be made from these descriptions by those having ordinary skill in the field to which the present disclosure appertains. Therefore, the idea of the present disclosure should not be limited to the embodiments described above, and all equivalents or equivalent variations of the claims as well as the claims to be described later will be said to fall within the scope of the idea of the present disclosure.

### Embodiment 1

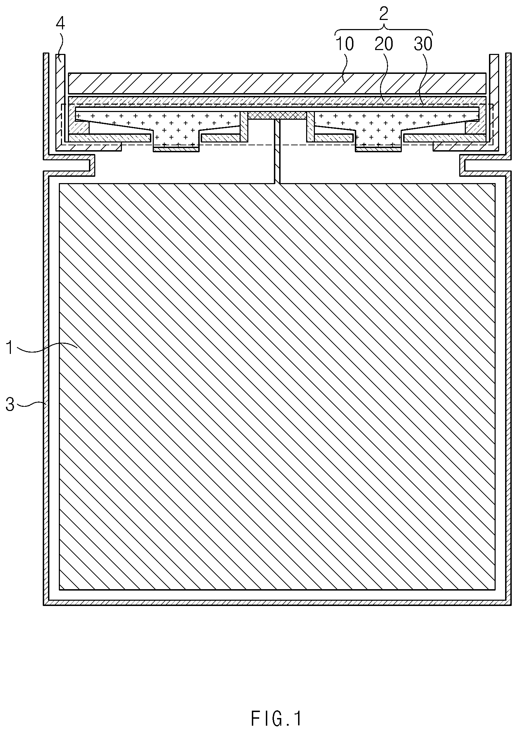

FIG. 1 is a cross-sectional view of a secondary battery according to Embodiment 1 of the present disclosure.

Referring to FIG. 1, a secondary battery according to Embodiment 1 of the present disclosure may include an electrode assembly 1, a can housing 3, and a top cap assembly 2.

The electrode assembly 1 may include a positive electrode, a negative electrode, and a separator interposed between the positive electrode and the negative electrode. The electrode assembly 1 may be a jelly roll-type electrode assembly having a cylindrical shape. In this case, the electrode assembly 1 may have a structure in which long sheet-like positive electrodes and negative electrodes are wound with a separator interposed therebetween. The electrode assembly 1 may be formed in a cylindrical shape extending in the vertical direction as a longitudinal direction and having a circular cross-section perpendicular to the longitudinal direction.

The can housing 3 may be provided to accommodate the electrode assembly 1. The can housing 3 may be made of a metal material and may have an electrode assembly space that accommodates the electrode assembly 1. The can housing 3 may have a shape that surrounds the electrode assembly 1 and is open upward. The can housing 3 may be electrically connected to the electrode assembly 1. The can housing 3 may be electrically connected to, for example, the negative electrode of the electrode assembly 1.

The top cap assembly 2 may be coupled to the can housing 3 to cover the electrode assembly 1. The top cap assembly 2 may be coupled to the upper opening of the can housing 3. The top cap assembly 2 may be electrically connected to the electrode assembly 1 in a state of being coupled to the can housing 3. The top cap assembly 2 may be electrically connected to, for example, the positive electrode of the electrode assembly 1.

The secondary battery according to Embodiment 1 of the present disclosure may further include a gasket 4. The gasket 4 may be provided to ensure the airtightness of the electrode assembly 1 accommodated in the can housing 3. The gasket 4 may be disposed between the top cap assembly 2 and the can housing 3, and may be made of a material having a predetermined elasticity. The gasket 4 may be provided, for example, in the form of a circular O-ring having a circular cross-section perpendicular to the longitudinal direction, and may be folded at the top and bottom ends to support the top cap assembly 2 so as not to deviate.

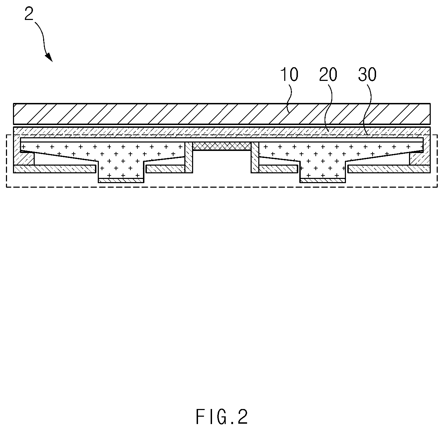

FIG. 2 is a cross-sectional view showing a top cap assembly of the secondary battery illustrated in FIG. 1.

Referring to FIG. 2, the top cap assembly 2 may include a top cap 10, a vent cover 20, and a fire extinguishing module 30.

The top cap 10 may be made of a conductive material. The top cap 10 may be made of, for example, a metal material such as nickel-plated iron. The top cap 10 may be electrically connected to the electrode assembly 1 via the vent cover 20. The top cap 10 may be provided to have the overall shape of a circular plate corresponding to the shape of the can housing 3, but is not limited thereto. The top cap 10 is positioned at the uppermost end of the can housing 3 and may be exposed to the outside to enable electrical connection to the outside.

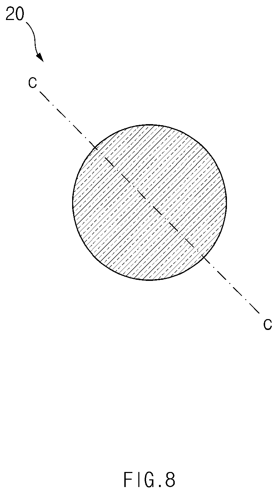

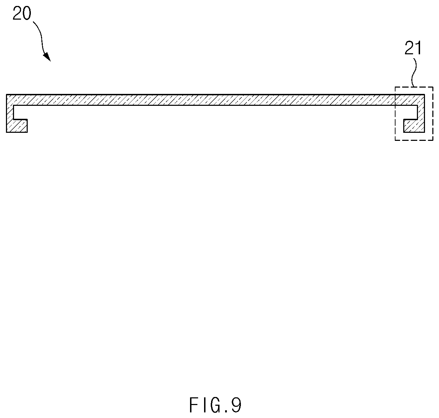

The vent cover 20 may be coupled to the lower side of the top cap 10. The vent cover 20 may be positioned between the top cap 10 and the fire extinguishing module 30. The vent cover 20 may be provided to rupture above a preset pressure to eject gas inside the can housing 3. The vent cover 20 may be made of a conductive material, for example, a metal material, to be electrically connected to the top cap 10. A plurality of notches for rupture may be formed in the vent cover 20. The vent cover 20 may have a shape that surrounds the fire extinguishing capsule 31 of the fire extinguishing module 30. A more detailed shape of the vent cover 20 will be described in detail later with reference to FIGS. 8 and 9.

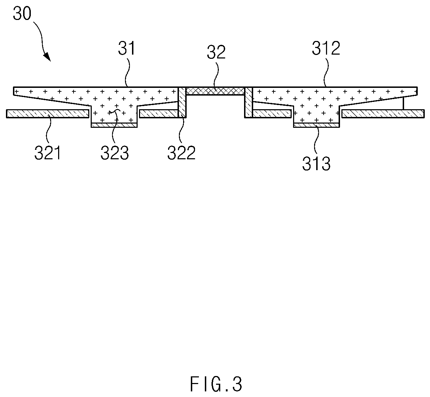

The fire extinguishing module 30 may be provided to eject a fire extinguishing material to the electrode assembly 1. The fire extinguishing module 30 may spray the fire extinguishing material to the electrode assembly 1 to prevent fire in the event of occurrence of abnormal behavior in the electrode assembly 1, for example, ignition or the like due to a short circuit phenomenon or a sudden change in temperature caused by the external environment. The fire extinguishing module 30 may be coupled to the lower side of the vent cover 20. Therefore, the fire extinguishing module 30, the vent cover 20, and the top cap 10 may be sequentially stacked and coupled in a direction toward the upper side of the electrode assembly 1. A more detailed shape and function of the fire extinguishing module 30 will be described in detail below with reference to FIGS. 3 to 7.

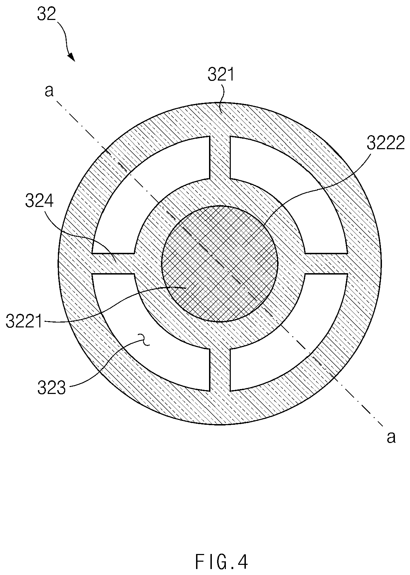

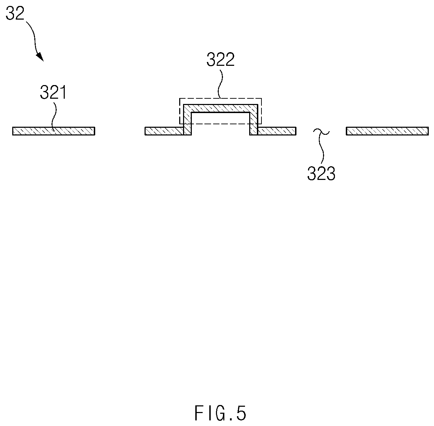

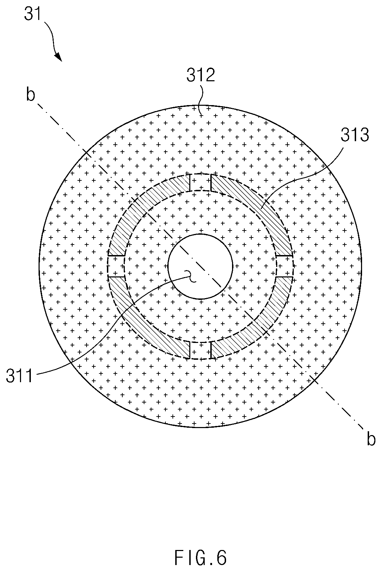

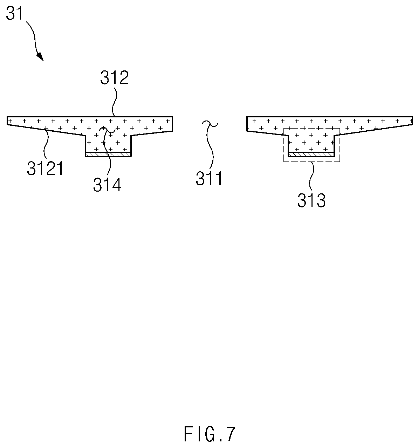

FIGS. 3 to 7 show the structure of the fire extinguishing module 30 according to Embodiment 1 of the present disclosure. Specifically, FIG. 3 is a cross-sectional view showing a coupling structure of a fire extinguishing module 30 according to Embodiment 1 of the present disclosure. FIG. 4 is a plan view of a support frame 32 of a fire extinguishing module 30 according to Embodiment 1 of the present disclosure, and FIG. 5 is a cross-sectional view of the support frame 32 taken along line a-a in FIG. 4. FIG. 6 is a bottom view of a fire extinguishing capsule 31 of a fire extinguishing module 30 according to Embodiment 1 of the present disclosure, and FIG. 7 is a cross-sectional view taken along line b-b in FIG. 6.

Referring to FIGS. 3 to 7, the fire extinguishing module 30 according to Embodiment 1 of the present disclosure may include a support frame 32 and a fire extinguishing capsule 31. The support frame 32 and the fire extinguishing capsule 31 may be coupled.

The support frame 32 may be coupled to the fire extinguishing capsule 31 and may be provided to support the fire extinguishing capsule 31. The support frame 32 may have the overall shape of a circular frame corresponding to the shape of the cylindrical electrode assembly 1 and the can housing 3. The support frame 32 may have a plurality of openings 323 provided so that the fire extinguishing material of the fire extinguishing capsule 31 may flow toward the electrode assembly 1. The fire extinguishing capsule 31 is coupled to the upper side of the support frame 32, and the fire extinguishing material of the fire extinguishing capsule 31 may flow directly to the electrode assembly 1 through the openings 323 of the support frame 32.

The support frame 32 may include a base portion 321 and a protrusion 322.

The base portion 321 may be provided to support the fire extinguishing capsule 31. The base portion 321 may support the fire extinguishing capsule 31 so that the fire extinguishing capsule 31 does not deviate downward. The base portion 321 is formed in the shape of a circular plate, and the protrusion 322 may be formed in a central region of the base portion 321.

An opening 323 may be formed in the base portion 321. The openings 323 may be formed in plurality in the base portion 321, and may be provided so that the fire extinguishing material inside the fire extinguishing capsule 31 may flow to the electrode assembly 1 as described above. The openings 323 may have the shape of an arc having a predetermined width. The plurality of openings 323 may be provided to be spaced apart from each other in the circumferential direction. For example, four openings 323 having an arc shape may be provided to be spaced apart from each other at equal intervals in the circumferential direction. In this case, the plurality of spaced apart openings 323 may have a shape that surrounds the protrusion 322 in the center of the base portion 321. A bridge portion 324 connecting the edge part and the center part of the base portion 321 may be formed between the neighboring openings 323. When four openings 323 spaced apart from each other are provided, four bridge portions 324 may be provided corresponding thereto. The bridge portion 324 may be positioned between the melting portions 313 spaced apart from each other to be described later.

The protrusion 322 may be formed to protrude upward at a predetermined height from the center part of the base portion 321. The protrusion 322 may be electrically connected to the electrode assembly 1. The protrusion 322 may penetrate to be coupled to the through hole 311 of the fire extinguishing capsule 31 to be described later. The protrusion may be in contact with the vent cover 20.

The fire extinguishing capsule 31 may be provided to accommodate the fire extinguishing material to be ejected to the electrode assembly 1. The fire extinguishing capsule 31 may be provided with a receiving space 314 that accommodates the fire extinguishing material, and the fire extinguishing material accommodated in the receiving space 314 may be provided to be ejected to the electrode assembly 1 when an environment at a preset temperature or higher occurs.

The fire extinguishing capsule 31 may be coupled to the support frame 32 and supported by the support frame 32. The fire extinguishing capsule 31 may be formed in an overall circular shape corresponding to the shape of the cylindrical can housing 3, and as described above, a through hole 311 through which the protrusion 322 of the support frame 32 penetrates is formed in the center part of the fire extinguishing capsule 31, so that the fire extinguishing capsule 31 may have the shape of a ring or a donut.

The fire extinguishing capsule may include a housing portion 312 and a melting portion 313.

The housing portion 312 may be provided to form a receiving space 314 that accommodates the fire extinguishing material. The housing portion 312 forms the overall appearance of the fire extinguishing capsule 31 and may have the shape of a circular ring with the receiving space 314 formed therein. The top surface of the housing portion 312 may face the vent cover 20. A part of the bottom surface of the housing portion 312 may be accommodated in and supported by the support frame 32, and the remaining part may be provided as the melting portion 313 that is exposed to face the electrode assembly 1 through the opening 323 of the support frame 32.

At least a part of the housing portion 312 may be formed to be inclined. Specifically, the bottom surface 3121 of the housing portion 312 surrounding the melting portion 313 may be provided to be inclined so that the height thereof gradually decreases in a direction toward the melting portion 313. By employing this configuration, the fire extinguishing material may flow more easily in a downward direction toward the electrode assembly 1 when the melting portion 313 melts.

The melting portion 313 may be provided to melt above a preset temperature to eject the fire extinguishing material to the electrode assembly 1. The melting portion 313 may be formed on the bottom surface of the housing portion 312. The melting portion 313 may have a shape that protrudes downward from the bottom surface of the housing portion 312. The melting portion 313 may extend from the housing portion 312, and the melting portion 313 and the housing portion 312 may be integrally formed, for example. The melting portion 313 may be made of a material that melts at a preset reference temperature so that it may melt above a preset temperature to eject the fire extinguishing material in the receiving space 314 inside the housing portion 312.

The melting portion 313 in the form of protruding from the bottom surface of the housing portion 312 may be inserted into the opening 323 of the support frame 32. In this case, the melting portion 313 may be formed in plurality corresponding to the openings 323 of the support frame 32, and likewise, the plurality thereof may be positioned to be spaced apart from each other along the circumferential direction. The melting portion 313 may be formed in an arc shape having a predetermined width. For example, four melting portions 313 having an arc shape may be coupled in a form in which they are spaced apart at equal intervals along the circumferential direction and inserted into the opening 323 of the support frame 32, respectively. The position of the opening 323 of the support frame 32 and the position of the melting portion 313 of the fire extinguishing capsule 31 may correspond to each other. The above-described bridge portion 324 of the support frame 32 may be coupled in the space between the neighboring melting portions 313.

FIGS. 8 and 9 show a vent cover 20 of a top cap assembly according to Embodiment 1 of the present disclosure. FIG. 8 is a plan view of a vent cover 20 of a top cap assembly according to Embodiment 1 of the present disclosure, and FIG. 9 is a cross-sectional view taken along line c-c in FIG. 8.

As described above, when gas is generated in the electrode assembly 1 due to heat generation issue or the like, the vent cover 20 may be provided to rupture above a preset pressure to discharge the internal gas to the outside. The vent cover 20 is disposed between the top cap 10 and the fire extinguishing module 30, and a plurality of notches may be formed for easy rupture.

Referring to FIGS. 8 and 9, the vent cover 20 may be formed in the shape of a circular plate to cover the fire extinguishing module 30, and a bent portion 21 may be formed at the edge thereof. In this case, the vent cover 20 may have a shape that wraps around the fire extinguishing capsule 31 of the fire extinguishing module 30.

The bent portion 21 of the vent cover 20 may wrap around the fire extinguishing capsule 31 of the fire extinguishing module 30. By employing this configuration, the structural stability of the fire extinguishing capsule 31 may be improved, and in addition, the stability of the electrical connection between the support frame 32 coupled to the fire extinguishing capsule 31 and the vent cover 20 may also be improved. The end of the bent portion 21 of the vent cover 20 may have a shape that is bent in a direction of being inserted into the space between the fire extinguishing capsule 31 and the support frame 32.

### Embodiment 2

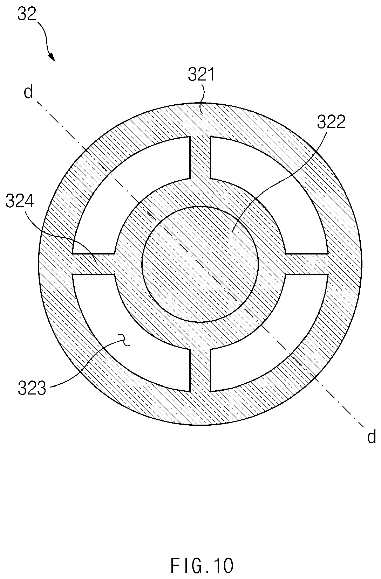

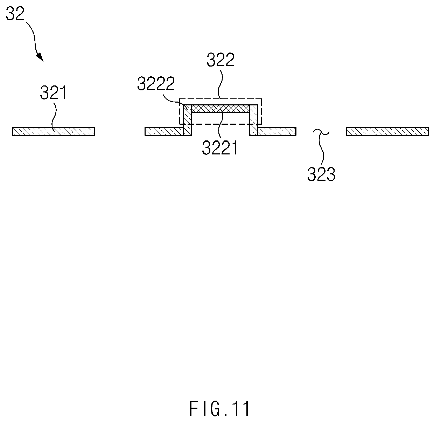

FIGS. 10 and 11 show a support frame 32 of a fire extinguishing module according to Embodiment 2 of the present disclosure. FIG. 10 is a plan view of a support frame 32 of a fire extinguishing module according to Embodiment 2 of the present disclosure, and FIG. 11 is a cross-sectional view of a support frame 32 taken along line d-d in FIG. 10.

Embodiment 2 of the present disclosure may differ from Embodiment 1 in that a blocking plate 3221 is provided in the support frame. Except for the differences, it should be noted that the contents of the secondary battery according to Embodiment 1 of the present disclosure described above may be commonly applied to Embodiment 2 as well, and therefore, the contents in common with Embodiment 1 will be omitted as much as possible, and Embodiment 2 will be described focusing on differences.

Referring to FIGS. 10 and 11, the protrusion 322 of the support frame 32 may include a blocking plate 3221 and a connection frame 3222.

The blocking plate 3221 may be electrically connected to the electrode assembly 1. The blocking plate 3221 may be made of a conductive material. The blocking plate 3221 may be electrically connected to the electrode assembly 1 and may be provided to block an overcurrent. The blocking plate 3221 may be a current interrupt device (CID) filter provided to block a current when a preset allowable current or more is generated. The blocking plate 3221 may be electrically connected to the vent cover 20 in contact therewith.

The connection frame 3222 may extend in the vertical direction between the blocking plate 3221 and the base portion 321. The connection frame 3222 may support the blocking plate 3221. The connection frame 3222 may extend upward from an inner end of the base portion 321. The connection frame 3222 may be made of the same material as the base portion 321. The connection frame 3222 may be integrally formed with the base portion 321. By employing this configuration, the thermal and electrical stability of the secondary battery may be further improved by blocking the generation of overcurrent as well as the spraying of the fire extinguishing powder.

The present disclosure has been hereinabove described with regard to a limited number of embodiments and drawings, but the above description is merely an illustrative description of the technical ideas of the present disclosure, and various modifications and variations will be possible by those having ordinary skill in the technical field pertaining to the present disclosure without departing from the essential characteristics of the present disclosure.

Therefore, the embodiments disclosed in the present disclosure are not intended to limit the technical ideas of the present disclosure, but for illustrative purposes, and the scope of the technical ideas of the present disclosure is not limited by these embodiments. The scope of protection of the present disclosure should be interpreted in accordance with the claims below, and all technical ideas within the scope equivalent thereto should be construed as being included in the scope of the present disclosure.

### [List of Reference Numerals]

1: Electrode assembly
2: Top cap assembly
3: Can housing
4: Gasket
10: Top cap
20: Vent cover
30: Fire extinguishing module
31: Fire extinguishing capsule
311: Through hole
312: Housing portion
3121: Bottom surface
313: Melting portion
314: Receiving space
32: Support frame
321: Base portion
322: Protrusion
3221: Blocking plate
3222: Connection frame
323: Opening
324: Bridge portion

## Claims

1. A secondary battery comprising:
a cylindrical electrode assembly;
a can housing accommodating the electrode assembly; and
a top cap assembly coupled to the can housing to cover the electrode assembly,
wherein the top cap assembly comprises a fire extinguishing module having a fire extinguishing powder sprayed to the electrode assembly; and a top cap disposed above the fire extinguishing module and disposed to be electrically connectable to the electrode assembly to enable electrical connection to the outside,
wherein the fire extinguishing module comprises:
a fire extinguishing capsule in which a receiving space accommodating the fire extinguishing material is formed and at least a portion thereof is formed to be meltable; and
a support frame that is coupled to the fire extinguishing capsule to support the fire extinguishing capsule and has an opening formed in a portion thereof so that the fire extinguishing material to flow to the electrode assembly.

2. The secondary battery according to claim 1,
wherein the support frame comprises:
a base portion supporting the fire extinguishing capsule; and
a protrusion protruding upward at a predetermined height from a center part of the base portion.

3. The secondary battery according to claim 2,
wherein a through hole through which the protrusion penetrates is formed in a center part of the fire extinguishing capsule.

4. The secondary battery according to claim 2,
wherein the protrusion comprises:
a blocking plate electrically connected to the electrode assembly and provided to block an overcurrent; and
a connection frame extending in a vertical direction between the blocking plate and the base portion.

5. The secondary battery according to claim 2,
wherein the openings are formed in plurality in the base portion.

6. The secondary battery according to claim 5,
wherein the plurality of openings are spaced apart from each other along a circumferential direction on the base portion.

7. The secondary battery according to claim 2,
wherein the fire extinguishing capsule comprises:
a housing portion forming the receiving space; and
a melting portion formed on a bottom surface of the housing portion and provided to melt above a preset temperature to eject the fire extinguishing material.

8. The secondary battery according to claim 7,
wherein the melting portion is provided to protrude downward from the bottom surface of the housing portion.

9. The secondary battery according to claim 7,
wherein the bottom surface of the housing portion is formed to be inclined in a direction of decreasing height toward the melting portion.

10. The secondary battery according to claim 7,
wherein the melting portion is inserted into the opening.

11. The secondary battery according to claim 7,
wherein the plurality of openings are formed to be spaced apart from each other along the circumferential direction on the base portion, and
the plurality of melting portions are spaced apart from each other along the circumferential direction on the bottom surface of the housing portion corresponding to the positions of the openings.

12. A top cap assembly provided to be coupled to a cylindrical electrode assembly, the top cap assembly comprising:
a fire extinguishing capsule in which a receiving space accommodating a fire extinguishing material is formed and at least a portion thereof is formed to be meltable;
a support frame that is coupled to the fire extinguishing capsule to support the fire extinguishing capsule and has an opening formed in a portion thereof so that the fire extinguishing material flows to the electrode assembly; and
a top cap disposed above the coupled support frame and fire extinguishing capsule and provided to be electrically connected to the electrode assembly to enable electrical connection to the outside.

13. The top cap assembly according to claim 12, further comprising:
a vent cover that is disposed between the top cap and the fire extinguishing capsule, is provided to rupture above a preset pressure to eject gas, and has an edge formed to be bent so as to surround the fire extinguishing capsule.

14. A fire extinguishing module provided above a cylindrical electrode assembly to eject a fire extinguishing material, the fire extinguishing module comprising:
a fire extinguishing capsule in which a receiving space accommodating the fire extinguishing material is formed and at least a portion thereof is formed to be meltable; and
a support frame that is coupled to the fire extinguishing capsule to support the fire extinguishing capsule and has an opening formed in a portion thereof so that the fire extinguishing material to flow to the electrode assembly.
